# EUROPEAN PATENT APPLICATION

(11) **EP 3 751 395 A1**
(43) Date of publication of application: **16.12.2020**
(21) Application number: 18905825.8
(22) Date of filing: 05.12.2018
(51) Int. Cl.: G06F 3/01

(54) **INFORMATION EXCHANGE METHOD, DEVICE, STORAGE MEDIUM, AND ELECTRONIC DEVICE**

(30) Priority: 11.02.2018 CN 201810142618
(71) Applicant: Tencent Technology (Shenzhen) Company Limited, Shenzhen, Guangdong 518057 (CN)
(72) Inventor: QIU, Meng, Shenzhen, GUANGDONG 518057 (CN); PAN, Jiaqi, Shenzhen, GUANGDONG 518057 (CN); ZHANG, Ya, Shenzhen, GUANGDONG 518057 (CN); ZHANG, Shuting, Shenzhen, GUANGDONG 518057 (CN); XIAO, Qinghua, Shenzhen, GUANGDONG 518057 (CN); WANG, Junming, Shenzhen, GUANGDONG 518057 (CN)
(74) Representative: Eisenführ Speiser
(86) International application number: PCT/CN2018/119356
(87) International publication number: WO 2019/153860

(57) **Abstract**

The present application discloses an information exchange method, a device, a storage medium, and an electronic device. The method comprises: a terminal extracting a biological feature of a target object, wherein the target object controls, via a first client, a first virtual object to perform a virtual task; the terminal identifying a current first emotion of the target object according to the extracted biological feature; the terminal determining first exchange information to be exchanged that matches the first emotion; and the terminal sending the first exchange information to a second client of a second virtual object, wherein the second virtual object and the first virtual object jointly perform the virtual task. The present application resolves the technical issue of highly complex exchange operations existing in related information exchange methods.

## Description

The present disclosure claims priority to Chinese Patent Application No. 201810142618X, filed with the China National Intellectual Property Agency on February 11, 2018 and entitled " METHOD AND APPARATUS FOR INFORMATION INTERACTION, STORAGE MEDIUM, AND ELECTRONIC DEVICE", which is incorporated herein by reference in its entirety.

### FIELD OF THE TECHNOLOGY

The present disclosure relates to the field of computers, and specifically, to a method and an apparatus for information interaction, a storage medium, and an electronic device.

### BACKGROUND OF THE DISCLOSURE

An input plug-in is generally provided in an operation interface displayed by an application client that is run by a terminal, for real-time information interaction in the application client. Information inputted by a user is obtained via the input plug-in, and the information is transmitted to a target object with which the user is to interact, so as to achieve information interaction.

At present, both hands of a user are required for completing a preset application task in various terminal applications. That is, when applying the above method for information interaction provided in related technology, it is usually necessary to first interrupt an application task executed by a control object controlled by the application client, and then restore the application task executed by the control object after information interaction with the target object is completed via the activated input plug-in. In other words, an interaction operation is highly complex in a process of information interaction with the target object.

Currently, there is no effective solution proposed for the foregoing problem.

### SUMMARY

A method and an apparatus for information interaction, a storage medium, and an electronic device are provided according to embodiments of the present disclosure, so as to address at least a technical issue of high complex interaction operation in related methods for information interaction.

A method for information interaction is provided according to an aspect of embodiments of the present disclosure. The method includes: extracting, by a terminal, a biological feature of a target object, where a first virtual object is controlled by the target object via a first client to execute a virtual task; recognizing, by the terminal, a current first emotion of the target object according to the extracted biological feature; determining, by the terminal, first interaction information matching the first emotion, where the first interaction information is for interaction; and transmitting, by the terminal, the first interaction information to a second client at which a second virtual object is located, where the second virtual object and the first virtual object execute the virtual task jointly.

An apparatus for information interaction is provided according to another aspect of embodiments of the present disclosure. The apparatus is applied to a terminal, and includes: an extraction unit, configured to extract a biological feature of a target object, where a first virtual object is controlled by the target object via a first client to execute a virtual task; a recognition unit, configured to recognize a current first emotion of the target object according to the extracted biological feature; a determining unit, configured to determine first interaction information matching the first emotion, where the first interaction information is for interaction; and a transmission unit, configured to transmit the first interaction information to a second client at which a second virtual object is located, where the second virtual object and the first virtual object execute the virtual task jointly.

A storage medium is further provided according to another aspect of the embodiments of the present disclosure. The storage medium stores a computer program, and the computer program is configured to perform the foregoing method for information interaction when executed.

In the method according to embodiments of the present disclosure, the terminal extracts the biological feature of the target object, recognizes the current first emotion of the target object according to the extracted biological feature, determines the first interaction information that is for interaction and matches the first emotion, and transmits the first interaction information to the second client at which the second virtual object is located. The first interaction information for interaction can be obtained according to the biological feature of the target object, and transmitted to the second client. Thereby, a problem is avoided that it is necessary to interrupt an application task executed by a control object controlled by an application client to complete information interaction with the target object. Therefore, information interaction can be achieved during the control object executing an application task. A technical effect of reducing complexity of an interaction operation is achieved, and a technical issue of high complex interaction operation in related methods for information interaction is addressed.

### BRIEF DESCRIPTION OF THE DRAWINGS

The accompanying drawings described herein are used for providing further understanding of the present disclosure, and constitute a part of the present disclosure. Exemplary embodiments of the present disclosure and descriptions thereof are used for explaining the present disclosure, and do not constitute any improper limitation to the present disclosure. The accompanying drawings are as follows.
Figure 1 is a schematic diagram of an application environment of an optional method for information interaction according to an embodiment of the present disclosure;
Figure 2 is a schematic flowchart of an optional method for information interaction according to an embodiment of the present disclosure;
Figure 3 is a schematic diagram of an optional method for information interaction according to an embodiment of the present disclosure;
Figure 4 is a schematic diagram of another optional method for information interaction according to an embodiment of the present disclosure;
Figure 5 is a schematic diagram of another optional method for information interaction according to an embodiment of the present disclosure;
Figure 6 is a schematic diagram of another optional method for information interaction according to an embodiment of the present disclosure;
Figure 7 is a schematic diagram of another optional method for information interaction according to an embodiment of the present disclosure;
Figure 8 is a schematic diagram of another optional method for information interaction according to an embodiment of the present disclosure;
Figure 9 is a schematic diagram of another optional method for information interaction according to an embodiment of the present disclosure;
Figure 10 is a schematic diagram of another optional method for information interaction according to an embodiment of the present disclosure;
Figure 11 is a schematic diagram of another optional method for information interaction according to an embodiment of the present disclosure;
Figure 12 is a schematic diagram of another optional method for information interaction according to an embodiment of the present disclosure;
Figure 13 is a schematic diagram of another optional method for information interaction according to an embodiment of the present disclosure;
Figure 14 is a schematic structural diagram of an optional apparatus for information interaction according to an embodiment of the present disclosure; and
Figure 15 is a schematic structural diagram of an optional electronic device according to an embodiment of the present disclosure.

### DESCRIPTION OF EMBODIMENTS

To make the object, technical solutions and advantages of the present application clearer, hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

The terms such as "first" and "second" in the specification, claims, and the foregoing accompanying drawings of the present disclosure are intended to distinguish between similar objects rather than describe a particular sequence or a chronological order. It is understood that the data termed in such a way are interchangeable in proper circumstances, so that the embodiments of the present disclosure described herein can be implemented with orders besides the order illustrated or described herein. In addition, the terms "include", "comprise" and any other variants thereof are intended to cover the non-exclusive inclusion. For example, a process, a method, a system, a product, or a device that includes a series of steps or units is not necessarily limited to those explicitly listed steps or units, but may include other steps or units that are not explicitly listed or that are inherent to such process, method, product, or device.

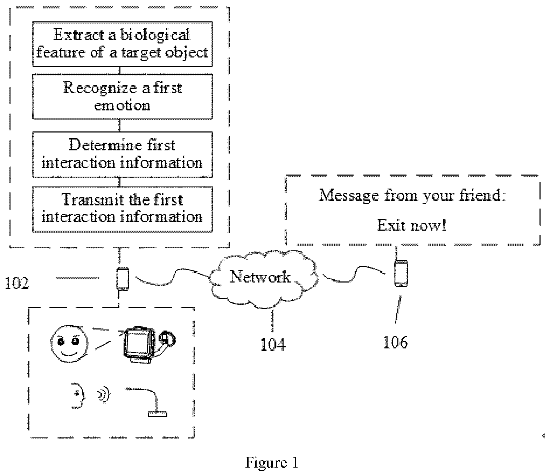

A method for information interaction is provided according to an aspect of embodiments of the present disclosure. Optionally, the method for information interaction may be applied to, but is not limited to, an environment as shown in Figure 1.

As shown in Figure 1, a terminal 102 recognizes a facial feature of a person via a recognition apparatus, or acquires a sound feature of a user via a sound acquisition device. The recognition apparatus and the sound acquisition device are carried by the terminal and configured to recognize a biological feature of a user. A first emotion of a target object is recognized according to the acquired biological feature. First interaction information matching the first emotion is determined, where the first interaction information is for interaction. The first interaction information is transmitted through a network 104, to a second terminal 106 at which a second virtual object is located. After the second terminal 106 receiving the first interaction information, the first interaction information is displayed on a second client. A first client is located at the first terminal 102, and the second client is located at the second terminal 106.

In an optional embodiment, the first client and the second client may include, but is not limited to, at least one of: a mobile phone, a tablet computer, a notebook computer, or another mobile hardware device capable of extracting the biological feature of the target object. The network may include but is not limited to a wireless network. The wireless network includes a network for wireless communication such as Bluetooth and WIFI. The foregoing description is merely an example, and this embodiment is not limited thereto.

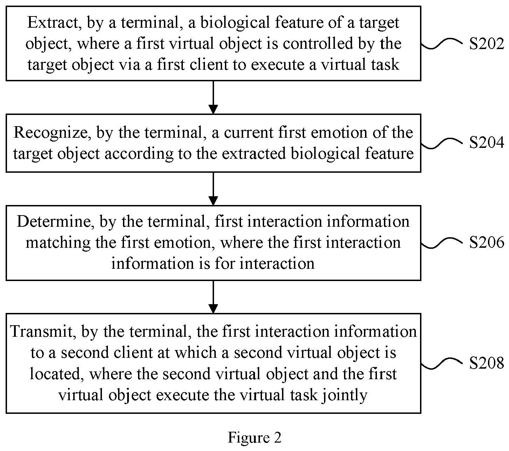

In an optional embodiment, the method for information interaction may include steps S202, S204, S206 and S208, as shown in Figure 2.

In step S202, a terminal extracts a biological feature of a target object, where a first virtual object is controlled by the target object via a first client to execute a virtual task.

In step S204, the terminal recognizes a current first emotion of the target object according to the extracted biological feature.

In step S206, the terminal determines first interaction information matching the first emotion, where the first interaction information is for interaction.

In step S208, the terminal transmits the first interaction information to a second client at which a second virtual object is located, where the second virtual object and the first virtual object execute the virtual task jointly.

Optionally, the method for information interaction may be applied to, but is not limited to, a field of games or simulation training. The field of games is taken as an example. The first client may be a terminal used by a user, and the second client may be a terminal used by another user. The first virtual object may be a virtual object controlled by the first client, and the second virtual object may be a virtual object controlled by the second client. After extracting the biological feature of a user, a terminal used by the user recognizes the current first emotion of the user, such as anger, tension, or excitement, according to the extracted biological feature. After recognizing the current first emotion, the terminal determines the first interaction information matching the current first emotion, and transmits the first interaction information to the second client used by another user.

In the foregoing method, the terminal extracts the biological feature of the target object, recognizes the current first emotion of the target object according to the extracted biological feature, determines the first interaction information which is for interaction and matches the first emotion, and transmits the first interaction information to the second client at which the second virtual object is located. The first interaction information for interaction can be obtained according to the biological feature of the target object, and transmitted to the second client. Thereby, a problem is avoided that it is necessary to interrupt an application task executed by a control object controlled by an application client to complete information interaction with the target object. Therefore, information interaction can be achieved during the control object executing an application task. A technical effect of reducing complexity of an interaction operation is achieved, and a technical issue of high complex interaction operation in related technology is addressed.

Optionally, a facial image of the target object may be acquired via an image acquisition device of the terminal at which the first client is located, and a facial feature of the target object may be extracted from the facial image. The terminal searches for an emotion identifier corresponding to the facial feature according to the extracted facial feature, and an emotion represented by the emotion identifier serves as the first emotion.

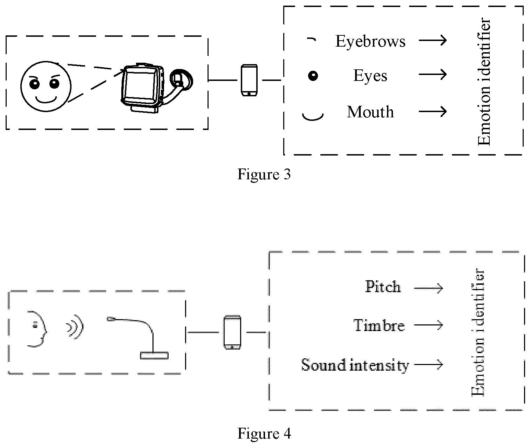

An example is taken with reference to Figure 3. The biological feature may be a facial expression or sound information of the user. As shown in Figure 3, the facial image of the user is acquired via an acquisition device. The acquired facial image is analyzed, and a facial feature such as eyebrows, eyes, and a mouth of the user is extracted. The first emotion of the user is correspondingly obtained according to a characteristic of each facial feature.

Optionally, a sound signal of the target object may be acquired via a sound acquisition device of the terminal at which the first client is located, and a sound feature of the target object is extracted from the sound signal. The terminal compares the extracted sound feature with a preset target audio feature. The terminal obtains an emotion identifier corresponding to the target audio feature, in a case that similarity between the sound feature and the target audio feature is higher than a predetermined threshold, and an emotion represented by the emotion identifier serves as the first emotion.

An example is taken for illustration with reference to Table 1 and Figure 4. The sound signal may be a sound delivered by a user. As shown in Figure 4, the sound acquisition device acquires the sound of the user after the sound is delivered by the user, compares the acquired sound with the target audio feature, obtains the emotion identifier corresponding to the target audio feature, and obtains the first emotion. As shown in Table 1, received is a sound signal of the target object acquired by the sound acquisition device, for example, a message such as "charge, brothers!". Afterwards, a sound feature "charge" in the received sound signal is compared with the target audio feature, and it is obtained that similarity between the sound feature and the target audio feature is 80%. The similarity exceeds a predetermined threshold of 60%, and thereby a corresponding emotion identifier is obtained according to the target audio feature. The emotion identifier is excitement, representing that the user is quite excited currently.

**Table 1**

| Sound signal | Sound feature | Similarity to a target audio feature | Emotion identifier |
|---|---|---|---|
| Charge, brothers! | Charge | 80% | Excitement |
| Exit, brothers! | Exit | 90% | Fear |
| Hold position! | Hold | 80% | Tension |
| Go left | Left | 10% | No corresponding emotion identifier |

The content in Table 1 is merely for explanation and description, and the present disclosure is not limited thereto. The target audio feature may be any sound signal acquired by the sound acquisition device. The sound feature may be acquired through any algorithm. The target audio feature may be obtained through a preset method. The emotion identifier may be another word.

The target audio feature may be a feature such as timbre, pitch, intensity, or the like, of a sound. After being obtained, the sound information is compared with timbre, pitch, and intensity of the target audio feature, so as to obtain the corresponding emotion identifier.

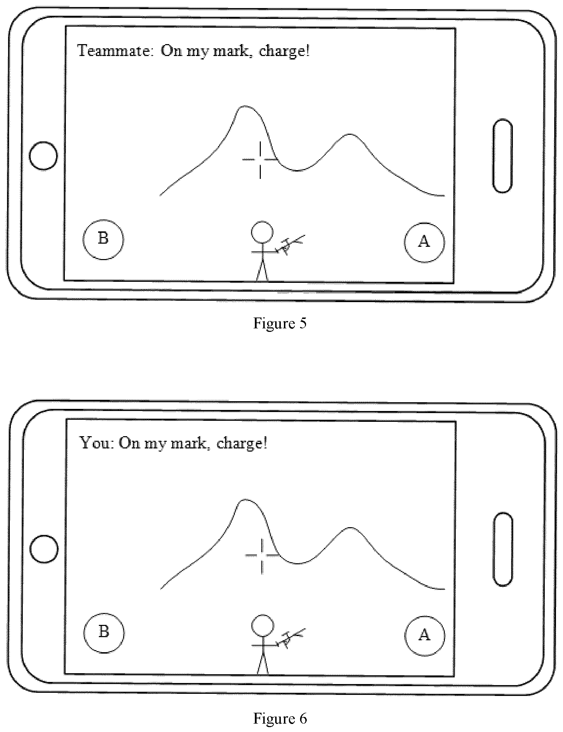

Hereinafter games are taken as an example with reference to Figure 5 and Figure 6. In a game, the facial image and the sound information of the user is acquired by the terminal at which the first client is located, via the acquisition device carried by the terminal. The acquired facial image is analyzed by the terminal, to obtain the facial feature. The acquired sound information is analyzed by the terminal, to obtain the sound feature. A corresponding emotion identifier is obtained according to the facial feature and the sound feature, so as to obtain the first emotion of the user. Afterwards, the first interaction information is correspondingly obtained according to the obtained first emotion, and is displayed on the second client. A display result is as shown in Figure 5.

The first interaction information may or may not be displayed on the first client when being displayed on the second client. Figure 6 shows an example in which the first client displays the first interaction information.

Optionally, the terminal may, but is not limited to, determine a virtual object of a same camp as the first virtual object as a second virtual object, and determine a virtual object of a different camp from the first virtual object as a third virtual object.

Optionally, the second virtual object may be one or more virtual objects belonging to the same camp as the first virtual object, and the third virtual object may be one or more virtual objects belonging to the different camp from the first virtual object. The second virtual object and the first virtual object may be teammates. The third virtual object and the first virtual object may be in different teams, or the like.

Optionally, the second virtual object or the third virtual object may be determined through a method as follows.
(1) The terminal groups virtual objects into the second virtual object or the third virtual object, according to identity information of the virtual objects.
(2) The terminal groups virtual objects into the second virtual object or the third virtual object, according to task objectives of the virtual objects.
(3) The terminal groups virtual objects into the second virtual object or the third virtual object, according to locations of the virtual objects.

The field of games is further taken an example for illustration. The identity information may be genders, nationalities, or the like, of the virtual objects. For example, the terminal sets a virtual object with a same nationality as the first virtual object as the second virtual object, and sets a virtual object with a different nationality from the first virtual object as the third virtual object. The locations may be birthplaces of the virtual objects. The birthplace is taken as an example, where different birth regions of virtual objects are preset. A virtual object with a same birth region as the first virtual object is set as the second virtual object, and a virtual object with a different birth region from the first virtual object is set as the third virtual object. The task objectives of the virtual objects may be a victory condition for the virtual objects. A virtual object with a same victory condition as the first virtual object is grouped into the second virtual object, and a virtual object with a different victory condition from the first virtual object is grouped into the third virtual object.

Optionally, the terminal may determine all virtual objects belonging to the same camp as the first virtual object to be the second virtual object, and transmits the first interaction information to the second client at which the second virtual object is located. Or, the terminal may determine a part of virtual objects belonging to the same camp as the first virtual object to be the second virtual object, and transmits the first interaction information to the second client at which the second virtual object is located. The terminal may further transmit second interaction information to a third client at which the third virtual object is located, where the third client belongs to a different camp from the first virtual object. The first interaction information matches the first emotion, the second interaction information matches a second emotion, and the first emotion is different from the second emotion.

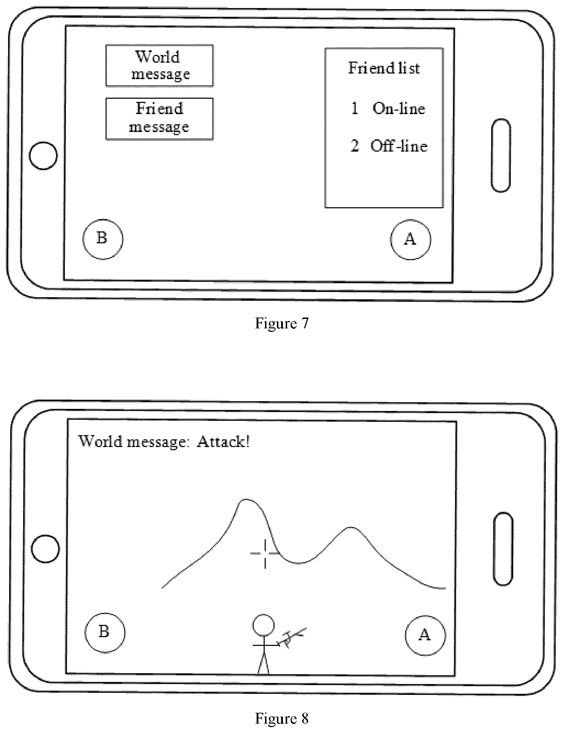

Games are further taken as an example with reference to Figure 7. As shown in Figure 7, a transmission range of the first interaction information may be configured at the first client, and the first interaction information may be a world message or a friend message. The first client may transmit the world message, or transmit the friend message to a friend designated in configuration. The word message may be transmitted to all other users. The friend message may be transmitted to friends in a group all at once, or transmitted to a designated friend, where the group is formed by multiple friends.

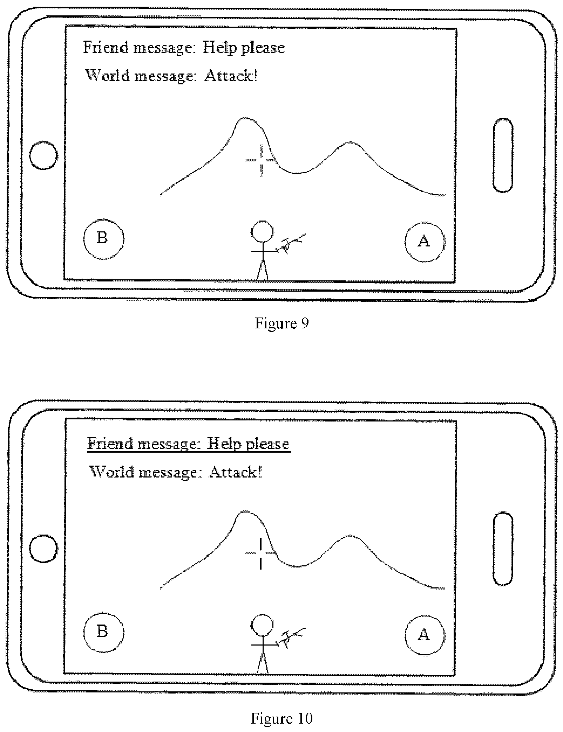

An example is shown in Figure 8 to Figure 10. In Figure 8, the world message transmitted by the first client is displayed at the second client, in a case that the first client is configured to transmit the world message. The world message is a message visible to all the users. In Figure 9, the friend message transmitted by the user is visible to the second client but not visible to all users, in a case that the user transmits the friend message. The friend message is only visible to a friend designated by the first client. The world message and the friend message may be distinguished by configuring different colors or different identifiers for the world message and the friend message. As shown in Figure 10, the friend message is marked with an underline, thereby distinguishable from the world message.

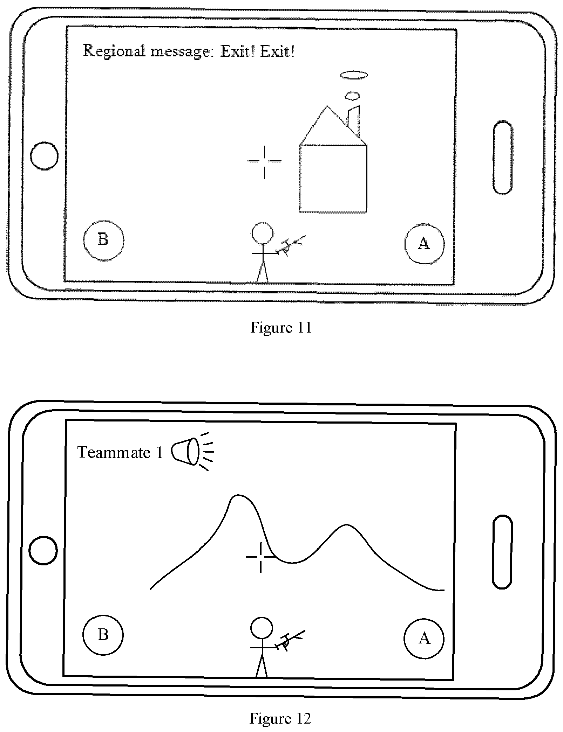

Optionally, the third client at which the third virtual object is located and the second client receive different messages, after the first client transmits a message. An example is shown in Figure 5 and Figure 11. Figure 5 shows the first interaction information received by the second client, and Figure 11 shows the first interaction information received by the third client. The third virtual object at the third client and the first virtual object at the first client are from different camps, and therefore different messages are displayed by the third client and the second client.

Optionally, that the terminal searches for the first interaction information matching the emotion identifier of the first emotion includes following steps. The terminal obtains the first interaction information matching a first emotion type, in a case that the emotion identifier indicates the first emotion type, where the first interaction information matching the first emotion type is configured to request help for the first virtual object. The terminal obtains the first interaction information matching a second emotion type, in a case that the emotion identifier indicates a second emotion type, where the first interaction information matching the second emotion type is configured to prompt the second virtual object for encouragement. The terminal obtains the first interaction information matching a third emotion type, in a case that the emotion identifier indicates the third emotion type, where the first interaction information matching the third emotion type is configured to issue a query request to the second virtual object.

In the method according to these embodiments, the terminal extracts the biological feature of the target object, recognizes the current first emotion of the target object according to the extracted biological feature, determines the first interaction information that is for interaction and matches the first emotion, and transmits the first interaction information to the second client at which the second virtual object is located. The first interaction information for interaction can be obtained according to the biological feature of the target object, and transmitted to the second client. Thereby, a problem is avoided that it is necessary to interrupt an application task executed by a control object controlled by an application client to complete information interaction with the target object. A technical effect of reducing complexity of an interaction operation is achieved, and a technical issue of high complex interaction operation in related technology is addressed.

In an optional implementation, that the terminal transmits the first interaction information to the second client at which the second virtual object is located includes steps S1 and S2.

In step S1, the terminal determines the second virtual object based on the virtual task, where the second virtual object and the first virtual object are from a same camp.

In step S2, the terminal transmits the first interaction information to the second client at which the second virtual object is located.

Optionally, the first interaction information may be text information, image information, or audio information. A case that text information serves as the first interaction information is illustrated with reference to Figure 5. A client displayed in Figure 5 is the second client, and a virtual object in the second client is the second virtual object. The first virtual object at the first client and the second virtual object are teammates. A message transmitted by the first client is displayed at an upper left corner of the second client. The second client is capable to know a condition of the first virtual object at the first client.

In this embodiment, the terminal determines a virtual object from the same camp as the first virtual object to be the second virtual object, and transmits the first interaction information to the second client at which the second virtual object is located. Thereby, the first interaction information is only transmitted to the second virtual object in the same camp, and flexibility is improved in transmitting the first interaction information.

In an optional implementation, that the terminal determines the second virtual objects based on the virtual task includes step (1) or (2).

In step (1), the terminal obtains all virtual objects from the same camp, as the second virtual objects.

In step (2), the terminal obtains a part of virtual objects from the same camp, as the second virtual objects, where the part of virtual objects is associated with the first virtual object.

The field of games is further taken as an example for explanation and illustration. Shown in Figure 7 is a configuration interface of the first client. The first client may transmit the world message, or transmit the friend message to the friend designated in configuration. The word message may be transmitted to all other users. The friend message may be transmitted to friends in a group all at once, or transmitted to a designated friend, where the group is formed by multiple friends.

In this embodiment, the terminal determines all virtual roles belonging to the same camp as a first virtual role to be second virtual roles, or determine a part of virtual roles belonging to the same camp as the first virtual role to be second virtual roles. Thereby, the second virtual roles can be flexibly determined, and information interaction is flexible.

In an optional implementation, the method further includes steps S1 and S2, when the terminal transmits the first interaction information to the second client at which the second virtual object is located.

In step S1, the terminal determines a third virtual object based on the virtual task, where the third virtual object and the first virtual object are from different camps.

In step S2, the terminal transmits second interaction information to a third client at which the third virtual object is located, where the second interaction information matches a second emotion, and the second emotion is different from the first emotion.

An example is shown in Figure 5 and Figure 11. Figure 5 shows the first interaction information received by the second client, and Figure 11 shows the first interaction information received by the third client. The third virtual object at the third client and the first virtual object at the first client are from different camps, and therefore different messages are displayed by the third client and the second client.

In this embodiment, the terminal determines the third virtual object, and transmits the second interaction information to the third virtual object. Thereby, flexibility of information interaction is improved, and complexity of the information interaction is further reduced.

In an optional implementation, that the terminal extracts the biological feature of the target object includes a following step S1, and that the terminal recognizes the current first emotion of the target object according to the extracted biological feature includes a following step S2.

In step S1, the terminal acquires a facial image of the target object via an image acquisition device in the terminal at which the first client is located, and the terminal extracts a facial feature of the target object from the facial image.

In step S2, the terminal recognizes the first emotion of the target object according to the extracted facial feature.

That the terminal recognizes the first emotion of the target object according to the extracted facial feature includes following steps S1 and S2.

In step S 1, the terminal searches for an emotion identifier matching the extracted facial feature.

In step S2, the terminal determines an emotion represented by the found emotion identifier to be the first emotion.

Optionally, the image acquisition device may be a camera on a mobile terminal. The facial feature may be a feature of a facial component such as eyebrows, forehead, eyes, face, or the like.

An example is illustrated with reference to Figure 3 and Table 2. The biological feature may be a facial expression or sound information of the user. As shown in Figure 3, a facial image of the user is acquired via an acquisition device. The acquired facial image is analyzed, and the facial feature such as eyebrows, eyes, and a mouth of the user is extracted. The first emotion of the user is correspondingly obtained according to a characteristic of each facial feature.

Table 2 shows an optional correspondence between the facial features and the first emotion.

**Table 2**

| Forehead and eyebrows | Eyes | A lower portion of face | First emotion |
|---|---|---|---|
| The eyebrows are raised, and become high and curved; skin under the eyebrows is stretched; and wrinkles may cross the forehead | The eyes are widely open; upper eyelids are raised; lower eyelids fall; and the white of the eyes are exposed above or below pupils | The lower jaw falls; the mouth opens, and the lips are separated from the teeth, while the mouth portion is not tense or stretched | Surprise |

The image acquisition device being a camera is merely an optional example, and the present disclosure is not limited thereto.

Optionally, a facial image is clipped from the facial image based on a face detection algorithm, after the terminal obtains the facial image through the camera. A proportion of the clipped face image is different in different methods for facial feature extraction and expression classification. It is necessary to track the facial feature, in a case the facial image is a dynamic image. The clipped facial image is subject to collection processing or grayscale processing, and then the facial feature is extracted to recognize an expression.

In this embodiment, the terminal extracts the facial feature based on the facial image of the target object, and obtains the first emotion according to the facial feature. Thereby, the first emotion of the target object is directly obtained according to the facial feature, and complexity of information interaction is reduced.

In an optional implementation, that the terminal extracts the biological feature of the target object includes a following step S 1, and that the terminal recognizes the current first emotion of the target object according to the extracted biological feature includes a following step S2.

In step S1, the terminal acquires a sound signal of the target object via a sound acquisition device in the terminal at which the first client is located, and extracts a sound feature of the target object from the sound signal.

In step S2, the terminal recognizes the first emotion of the target object according to the extracted sound feature.

That the terminal recognizes the first emotion of the target object according to the extracted sound feature includes following steps S1, S2 and S3.

In step S 1, the terminal obtains a preset target audio feature, where the target audio feature is configured to trigger the first interaction information.

In step S2, the terminal obtains an emotion identifier corresponding to the target audio feature, in a case that similarity between the sound feature and the target audio feature is higher than a predetermined threshold.

In step S3, the terminal determines an emotion represented by the emotion identifier as the first emotion.

An example is taken for illustration with reference to the foregoing Table 1 and Figure 4. The sound signal may be a sound delivered by a user. As shown in Figure 4, the sound acquisition device acquires the sound of the user after the sound is delivered by the user, compares the acquired sound with the target audio feature, obtains the emotion identifier corresponding to the target audio feature, and obtains the first emotion. As shown in Table 1, received is a sound signal of the target object acquired by the sound acquisition device, for example, a message such as "charge, brothers!". Afterwards, a sound feature "charge" in the received sound signal is compared with the target audio feature, and it is obtained that similarity between the sound feature and the target audio feature is 80%. The similarity exceeds a predetermined threshold of 60%, and thereby a corresponding emotion identifier is obtained according to the target audio feature. The emotion identifier is excitement, representing that the user is quite excited currently.

The content in the foregoing Table 1 is merely for explanation and description, and the present disclosure is not limited thereto. The target audio feature may be any sound signal acquired by the sound acquisition device. The sound feature may be acquired through any algorithm. The target audio feature may be obtained through a preset method. The emotion identifier may be another word.

The target audio feature may be a feature such as timbre, pitch, intensity, or the like, of a sound. After being obtained, the sound information is compared with timbre, pitch, and intensity of the target audio feature, so as to obtain the corresponding emotion identifier. Optionally, an inputted voice is recognized through at least two branches for voice recognition, in analysis of the received sound signal. A recognition result is outputted only in a case that the two results of voice recognition from the two branches are consistent. The user is prompted to re-input the sound signal in a case that the two results of voice recognition from the two branches are inconsistent.

Optionally, in a case that the results of voice recognition from the at least two voice branches are inconsistent, the terminal may further process the at least two results of voice recognition according to a majority principle, a weighting algorithm, or a combination of the two, so as to obtain and output a voice recognition result.

Optionally, the branch for voice recognition may be implemented with a recognition algorithm or a training algorithm of hidden Markov model based on statistics, or a combination of the two.

In this embodiment, the target audio feature is preset. The terminal obtains the emotion identifier corresponding to the target audio feature, and determines the emotion identified by the emotion identifier as the first emotion, in a case that the similarity between the target audio feature and the sound feature is higher than the predetermined threshold. Thereby, the corresponding first emotion is obtained according to the sound information, and complexity of information interaction is reduced.

In an optional implementation, that the terminal determines the first interaction information, which is for interaction and matches the current first emotion of the target object, includes followings steps S1 and S2.

In step S1, the terminal obtains an emotion identifier of the first emotion.

In step S2, the terminal searches for the first interaction information matching the emotion identifier of the first emotion.

Optionally, correspondence between the emotion identifier of the first emotion and the first interaction information may be preset. Corresponding first interaction information is queried according to the obtained emotion identifier, from the preset correspondence between the emotion identifier and the first interaction information. Thereby, the first interaction information is obtained and transmitted.

In this embodiment, the first interaction information is queried according to the correspondence between the emotion identifier and the first interaction information, after the terminal obtains the emotion identifier. Thereby, the first interaction information can be transmitted, and efficiency of information interaction is improved.

In an optional implementation, that the terminal searches for the first interaction information matching the emotion identifier of the first emotion includes a following step.

In step (1), the terminal obtains the first interaction information matching the first emotion type, in a case that the emotion identifier indicates the first emotion type, where the first interaction information matching the first emotion type is configured to request help for the first virtual object.

In step (2), the terminal obtains the first interaction information matching the second emotion type, in a case that the emotion identifier indicates the second emotion type, where the first interaction information matching the second emotion type is configured to prompt the second virtual object for encouragement.

In step (3), the terminal obtains the first interaction information matching the third emotion type, in a case that the emotion identifier indicates the third emotion type, where the first interaction information matching the third emotion type is configured to issue a query request to the second virtual object.

Games are further taken as an example for illustration. Content carried by the first interaction information is different for different types of the obtained emotion identifier. The first emotion type may be tension, excitement, doubt, or the like. The first interaction information may be text information, such as "Save me", "Come on, we can do it!", and "Are you sure?". The first interaction information matching the first emotion type may be "Save me", in a case that the emotion identifier indicates the first emotion type to be, for example, tension. The first interaction information matching the first emotion type may be "Come on, we can do it!", in a case that the emotion identifier indicates the first emotion type to be, for example, excitement. The first interaction information matching the first emotion type may be "Are you sure?" for expressing doubts, in a case that the emotion identifier indicates the first emotion type to be, for example, doubt.

In this embodiment, the terminal determines the content of the first interaction information according to a type of the emotion identifier. Thereby, complexity of information interaction is further reduced, and flexibility of the information interaction is improved.

In an optional implementation, that the terminal determines the first interaction information, which is for interaction and matches the current first emotion of the target object, includes at least one of the following steps (1), (2), or (3).

In step (1), the terminal determines text information matching the first emotion.

In step (2), the terminal determines image information matching the first emotion.

In step (3), the terminal determines audio information matching the first emotion.

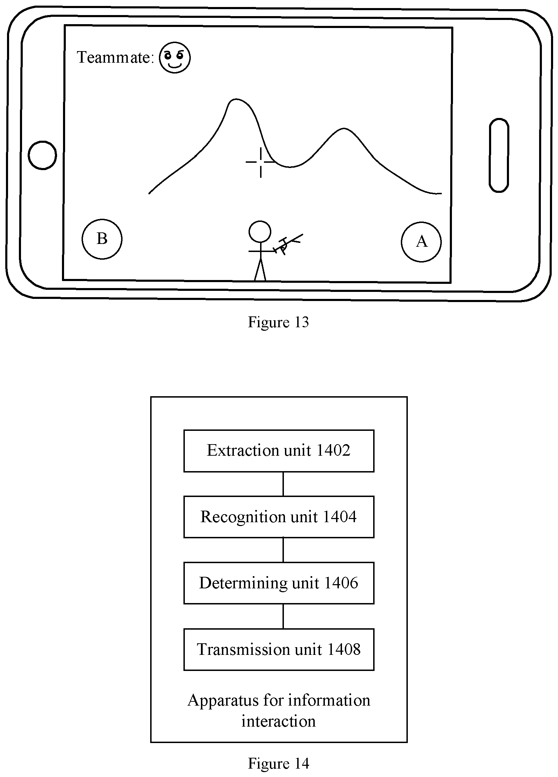

Games are further taken as an example with reference to Figure 12 and Figure 13. Figure 12 and Figure 13 show the second client. A message transmitted to from the first client to the second client may be a voice message or an image message. The voice message is as shown in Figure 12, and the image message is as shown in Figure 13.

Figure 12 and Figure 13 are merely examples, and the present disclosure is not limited thereto.

In this embodiment, the terminal sets different types for the first interaction information. Thereby, flexibility of information interaction is improved, and complexity of the information interaction is further reduced.

For brief description, the method in the above embodiments is described as a combination of a series of actions. Those skilled in the art should appreciate that the present disclosure is not limited to the described order of the actions, because some steps according to the present disclosure may be performed in another order or simultaneously. In addition, those skilled in the art should appreciate that all embodiments described in the specification is an optional embodiment, in which a related action or a related module may not be necessary for the present disclosure.

According to the foregoing description of implementations, those skilled in the art may clearly appreciate that the method according to the above embodiments may be implemented via software plus a necessary general hardware platform, or may be implemented via hardware. In most cases, the former implementation is better. Based on such understanding, the essence or the part contributing to the related art in technical solutions of the present disclosure may be implemented in a form of a software product. The computer software product is stored in a storage medium (such as ROM/RAM, a magnetic disk, or an optical disc), and includes several instructions to enable a terminal device (which may be a mobile phone, a computer, a server, a network device, and the like) to perform each method described in embodiments of the present disclosure.

An apparatus for information interaction is further provided according to another aspect of the embodiments of the present disclosure. The apparatus is configured to perform the aforementioned method for information interaction. The apparatus for information interaction is applied to a terminal. In an optional implementation of this embodiment, the apparatus for information interaction may include an extraction unit 1402, a recognition unit 1404, a determining unit 1406, and a transmission unit 1408, as shown in Figure 14.
(1) The extraction unit 1402 is configured to extract a biological feature of a target object, where a first virtual object is controlled by the target object via a first client to execute a virtual task.
(2) The recognition unit 1404 is configured to recognize a current first emotion of the target object according to the extracted biological feature.
(3) The determining unit 1406 is configured to determine first interaction information matching the first emotion, where the first interaction information is for interaction.
(4) The transmission unit 1408 is configured to transmit the first interaction information to a second client at which a second virtual object is located, where the second virtual object and the first virtual object execute the virtual task jointly.

Optionally, the apparatus for information interaction may be applied to, but is not limited to, a field of games or simulation training. The field of games is taken as an example. The first client may be a game device used by a user, and the second client may be a game device used by another user. The first virtual object may be a virtual object controlled by the first client, and the second virtual object may be a virtual object controlled by the second client. After extracting the biological feature of a user, a game device used by the user recognizes the current first emotion of the user, such as anger, tension, or excitement, according to the extracted biological feature. After recognizing the current first emotion, the first interaction information matching the current first emotion is determined, and transmitted to the second client used by another user.

In the foregoing method, the biological feature of the target object is extracted, the current first emotion of the target object is recognized according to the extracted biological feature, the first interaction information which is for interaction and matches the first emotion is determined, and the first interaction information is transmitted to the second client at which the second virtual object is located. The first interaction information for interaction can be obtained according to the biological feature of the target object, and transmitted to the second client. Thereby, a problem is avoided that it is necessary to interrupt an application task executed by a control object controlled by an application client to complete information interaction with the target object. Therefore, information interaction can be achieved during the control object executing an application task. A technical effect of reducing complexity of an interaction operation is achieved, and a technical issue of high complex interaction operation in related technology is addressed.

Optionally, the first interaction information may be, but is not limited to, one or more of: text information, image information, and audio information.

Optionally, a facial image of the target object may be acquired via an image acquisition device of a terminal at which the first client is located, and a facial feature of the target object may be extracted from the facial image. An emotion identifier corresponding to the facial feature is queried according to the extracted facial feature, and an emotion represented by the emotion identifier serves as the first emotion.

An example is taken with reference to Figure 3. The biological feature may be a facial expression or sound information of the user. As shown in Figure 3, the facial image of the user is acquired via an acquisition device. The acquired facial image is analyzed, and a facial feature such as eyebrows, eyes, and a mouth of the user is extracted. The first emotion of the user is correspondingly obtained according to a characteristic of each facial feature.

Optionally, a sound signal of the target object may be acquired via a sound acquisition device of the terminal at which the first client is located, and a sound feature of the target object is extracted from the sound signal. The extracted sound feature is compared with a preset target audio feature. An emotion identifier corresponding to the target audio feature is obtained in a case that similarity between the sound feature and the target audio feature is higher than a predetermined threshold, and an emotion represented by the emotion identifier serves as the first emotion.

An example is taken for illustration with reference to the foregoing Table 1 and Figure 4. The sound signal may be a sound delivered by a user. As shown in Figure 4, the sound acquisition device acquires the sound of the user after the sound is delivered by the user, compares the acquired sound with the target audio feature, obtains the emotion identifier corresponding to the target audio feature, and obtains the first emotion. As shown in Table 1, received is a sound signal of the target object acquired by the sound acquisition device, for example, a message such as "charge, brothers!". Afterwards, a sound feature "charge" in the received sound signal is compared with the target audio feature, and it is obtained that similarity between the sound feature and the target audio feature is 80%. The similarity exceeds a predetermined threshold of 60%, and thereby a corresponding emotion identifier is obtained according to the target audio feature. The emotion identifier is excitement, representing that the user is quite excited currently.

The content in the foregoing Table 1 is merely for explanation and description, and the present disclosure is not limited thereto. The target audio feature may be any sound signal acquired by the sound acquisition device. The sound feature may be acquired through any algorithm. The target audio feature may be obtained through a preset method. The emotion identifier may be another word.

The target audio feature may be a feature such as timbre, pitch, intensity, or the like, of a sound. After being obtained, the sound information is compared with timbre, pitch, and intensity of the target audio feature, so as to obtain the corresponding emotion identifier.

Hereinafter games are taken as an example with reference to Figure 5 and Figure 6. In a game, the facial image and the sound information of the user is acquired by a terminal at which the first client is located, via the acquisition device carried by the terminal. The acquired facial image is analyzed to obtain the facial feature. The acquired sound information is analyzed to obtain the sound feature. A corresponding emotion identifier is obtained according to the facial feature and the sound feature, so as to obtain the first emotion of the user. Afterwards, the first interaction information is correspondingly obtained according to the obtained first emotion, and is displayed on the second client. A display result is as shown in Figure 5.

The first interaction information may or may not be displayed on the first client when being displayed on the second client. Figure 6 shows an example in which the first client displays the first interaction information.

Optionally, a virtual object of a same camp as the first virtual object may be determined to be a second virtual object, and a virtual object of a different camp from the first virtual object may be determined to be a third virtual object. The present disclosure is not limited thereto.

Optionally, the second virtual object may be one or more virtual objects belonging to the same camp as the first virtual object, and the third virtual object may be one or more virtual objects belonging to the different camp from the first virtual object. The second virtual object and the first virtual object may be teammates. The third virtual object and the first virtual object may be in different teams, or the like.

Optionally, the second virtual object or the third virtual object may be determined through a method as follows.
(1) Virtual objects are grouped into the second virtual object or the third virtual object, according to identity information of the virtual objects.
(2) Virtual objects are grouped into the second virtual object or the third virtual object, according to task objectives of the virtual objects.
(3) Virtual objects are grouped into the second virtual object or the third virtual object, according to locations of the virtual objects.

The field of games is further taken an example for illustration. The identity information may be genders, nationalities, or the like, of the virtual objects. For example, a virtual object with a same nationality as the first virtual object is set as the second virtual object, and a virtual object with a different nationality from the first virtual object is set as the third virtual object. The locations may be birthplaces of the virtual objects. The birthplace is taken as an example, where different birth regions of virtual objects are preset. A virtual object with a same birth region as the first virtual object is set as the second virtual object, and a virtual object with a different birth region from the first virtual object is set as the third virtual object. The task objectives of the virtual objects may be a victory condition for the virtual objects. A virtual object with a same victory condition as the first virtual object is grouped into the second virtual object, and a virtual object with a different victory condition from the first virtual object is grouped into the third virtual object.

Optionally, all virtual objects belonging to the same camp as the first virtual object may be determined to be the second virtual object, and the first interaction information is transmitted to the second client at which the second virtual object is located. Or, a part of virtual objects belonging to the same camp as the first virtual object may be determined to be the second virtual object, and the first interaction information is transmitted to the second client at which the second virtual object is located. Second interaction information may be transmitted to a third client at which the third virtual object is located, where the third client belongs to a different camp from the first virtual object. The first interaction information matches the first emotion, the second interaction information matches a second emotion, and the first emotion is different from the second emotion.

Games are further taken as an example with reference to Figure 7. As shown in Figure 7, a transmission range of the first interaction information may be configured at the first client, and the first interaction information may be a world message or a friend message. The first client may transmit the world message, or transmit the friend message to a friend designated in configuration. The word message may be transmitted to all other users. The friend message may be transmitted to friends in a group all at once, or transmitted to a designated friend, where the group is formed by multiple friends.

An example is shown in Figure 8 to Figure 10. In Figure 8, the world message transmitted by the first client is displayed at the second client, in a case that the first client is configured to transmit the world message. The world message is a message visible to all the users. In Figure 9, the friend message transmitted by the user is visible to the second client but not visible to all users, in a case that the user transmits the friend message. The friend message is only visible to a friend designated by the first client. The world message and the friend message may be distinguished by configuring different colors or different identifiers for the world message and the friend message. As shown in Figure 10, the friend message is marked with an underline, thereby distinguishable from the world message.

Optionally, the third client at which the third virtual object is located and the second client receive different messages, after the first client transmits a message. An example is shown in Figure 5 and

Figure 11. Figure 5 shows the first interaction information received by the second client, and Figure 11 shows the first interaction information received by the third client. The third virtual object at the third client and the first virtual object at the first client are from different camps, and therefore different messages are displayed by the third client and the second client.

Optionally, that the first interaction information matching the emotion identifier of the first emotion is queried includes following steps. The first interaction information matching a first emotion type is obtained, in a case that the emotion identifier indicates the first emotion type, where the first interaction information matching the first emotion type is configured to request help for the first virtual object. The first interaction information matching a second emotion type is obtained, in a case that the emotion identifier indicates a second emotion type, where the first interaction information matching the second emotion type is configured to prompt the second virtual object for encouragement. The first interaction information matching a third emotion type is obtained, in a case that the emotion identifier indicates the third emotion type, where the first interaction information matching the third emotion type is configured to issue a query request to the second virtual object.

In the method according to these embodiments, the biological feature of the target object is extracted, the current first emotion of the target object is recognized according to the extracted biological feature, the first interaction information that is for interaction and matches the first emotion is determined, and the first interaction information is transmitted to the second client at which the second virtual object is located. The first interaction information for interaction can be obtained according to the biological feature of the target object, and transmitted to the second client. Thereby, a problem is avoided that it is necessary to interrupt an application task executed by a control object controlled by an application client to complete information interaction with the target object. A technical effect of reducing complexity of an interaction operation is achieved, and a technical issue of high complex interaction operation in related technology is addressed.

In an optional implementation, the transmission unit includes a first determining module and a first transmission module.
(1) The first determining module is configured to determine the second virtual object based on the virtual task, where the second virtual object and the first virtual object are from a same camp.
(2) The first transmission module is configured to transmit the first interaction information to the second client at which the second virtual object is located.

Optionally, the first interaction information may be text information, image information, or audio information. A case that text information serves as the first interaction information is illustrated with reference to Figure 5. A client displayed in Figure 5 is the second client, and a virtual object in the second client is the second virtual object. The first virtual object at the first client and the second virtual object are teammates. A message transmitted by the first client is displayed at an upper left corner of the second client. The second client is capable to know a condition of the first virtual object at the first client.

In this embodiment, a virtual object from the same camp as the first virtual object is determined to be the second virtual object, and the first interaction information is transmitted to the second client at which the second virtual object is located. Thereby, the first interaction information is only transmitted to the second virtual object in the same camp, and flexibility is improved in transmitting the first interaction information.

In an optional implementation, the first determining module includes a first obtaining submodule or a second obtaining submodule.
(1) The first obtaining submodule is configured to obtain all virtual objects from the same camp, as the second virtual objects.
(2) The second obtaining submodule is configured to obtain a part of virtual objects from the same camp, as the second virtual objects, where the part of virtual objects is associated with the first virtual object.

The field of games is further taken as an example for explanation and illustration. Shown in Figure 7 is a configuration interface of the first client. The first client may transmit the world message, or transmit the friend message to the friend designated in configuration. The word message may be transmitted to all other users. The friend message may be transmitted to friends in a group all at once, or transmitted to a designated friend, where the group is formed by multiple friends.

In this embodiment, all virtual roles belonging to the same camp as a first virtual role is determined to be second virtual roles, or a part of virtual roles belonging to the same camp as the first virtual role is determined to be second virtual roles. Thereby, the second virtual roles can be flexibly determined, and information interaction is flexible.

In an optional implementation, the transmission unit further includes a second determining module and a second transmission module.
(1) The second determining module is configured to determine a third virtual object based on the virtual task, where the third virtual object and the first virtual object are from different camps.
(2) The second transmission module is configured to transmit second interaction information to a third client at which the third virtual object is located, where the second interaction information matches a second emotion, and the second emotion is different from the first emotion.

An example is shown in Figure 5 and Figure 11. Figure 5 shows the first interaction information received by the second client, and Figure 11 shows the first interaction information received by the third client. The third virtual object at the third client and the first virtual object at the first client are from different camps, and therefore different messages are displayed by the third client and the second client.

In this embodiment, the third virtual object is determined, and the second interaction information is transmitted to the third virtual object. Thereby, flexibility of information interaction is improved, and complexity of the information interaction is further reduced. An example is shown in Figure 5 and Figure 11. Figure 5 shows the first interaction information received by the second client, and Figure 11 shows the first interaction information received by the third client. The third virtual object at the third client and the first virtual object at the first client are from different camps, and therefore different messages are displayed by the third client and the second client.

In this embodiment, the third virtual object is determined, and the second interaction information is transmitted to the third virtual object. Thereby, flexibility of information interaction is improved, and complexity of the information interaction is further reduced.

In an optional implementation, the extraction unit includes a first acquisition module and a first extraction module, and the recognition unit includes a recognition module.
(1) The first acquisition module is configured to acquire a facial image of the target object via an image acquisition device in the terminal at which the first client is located, and the first extraction module is configured to extract a facial feature of the target object from the facial image.
(2) The recognition module is configured to recognize the first emotion of the target object according to the extracted facial feature.

The recognition module includes a first search submodule and a first determining submodule.
(1) The first search submodule is configured to search for an emotion identifier matching the extracted facial feature.
(2) The first determining submodule is configured to determine an emotion represented by the found emotion identifier to be the first emotion.

Optionally, the image acquisition device may be a camera on a mobile terminal. The facial feature may be a feature of a facial component such as eyebrows, forehead, eyes, face, or the like.

An example is illustrated with reference to Figure 3 and the foregoing Table 2. The biological feature may be a facial expression or sound information of the user. As shown in Figure 3, a facial image of the user is acquired via an acquisition device. The acquired facial image is analyzed, and the facial feature such as eyebrows, eyes, and a mouth of the user is extracted. The first emotion of the user is correspondingly obtained according to a characteristic of each facial feature.

The image acquisition device being a camera is merely an optional example, and the present disclosure is not limited thereto.

Optionally, a facial image is clipped from the facial image based on a face detection algorithm, after the facial image is obtained through the camera. A proportion of the clipped face image is different in different methods for facial feature extraction and expression classification. It is necessary to track the facial feature, in a case the facial image is a dynamic image. The clipped facial image is subject to collection processing or grayscale processing, and then the facial feature is extracted to recognize an expression.

In this embodiment, the facial feature is extracted based on the facial image of the target object, and the first emotion is obtained according to the facial feature. Thereby, the first emotion of the target object is directly obtained according to the facial feature, and complexity of information interaction is reduced. Optionally, the image acquisition device may be a camera on a mobile terminal. The facial feature may be a feature of a facial component such as eyebrows, forehead, eyes, face, or the like.

In an optional implementation, the extraction unit includes a second acquisition module and a second extraction module, and the recognition unit includes a second recognition module.
(1) The second acquisition module is configured to acquire a sound signal of the target object via a sound acquisition device in the terminal at which the first client is located, and the second extraction module is configured to extract a sound feature of the target object from the sound signal.
(2) The second recognition module is configured to recognize the first emotion of the target object according to the extracted sound feature.

The second recognition module includes a third obtaining submodule, a fourth obtaining submodule, and a second determining submodule.
(1) The third obtaining submodule is configured to obtain a preset target audio feature, where the target audio feature is configured to trigger the first interaction information.
(2) The fourth obtaining submodule is configured to obtain an emotion identifier corresponding to the target audio feature, in a case that similarity between the sound feature and the target audio feature is higher than a predetermined threshold.
(3) The second determining submodule is configured to determine an emotion represented by the emotion identifier as the first emotion.

An example is taken for illustration with reference to the foregoing Table 1 and Figure 4. The sound signal may be a sound delivered by a user. As shown in Figure 4, the sound acquisition device acquires the sound of the user after the sound is delivered by the user, compares the acquired sound with the target audio feature, obtains the emotion identifier corresponding to the target audio feature, and obtains the first emotion. As shown in Table 1, received is a sound signal of the target object acquired by the sound acquisition device, for example, a message such as "charge, brothers!". Afterwards, a sound feature "charge" in the received sound signal is compared with the target audio feature, and it is obtained that similarity between the sound feature and the target audio feature is 80%. The similarity exceeds a predetermined threshold of 60%, and thereby a corresponding emotion identifier is obtained according to the target audio feature. The emotion identifier is excitement, representing that the user is quite excited currently.

The content in the foregoing Table 1 is merely for explanation and description, and the present disclosure is not limited thereto. The target audio feature may be any sound signal acquired by the sound acquisition device. The sound feature may be acquired through any algorithm. The target audio feature may be obtained through a preset method. The emotion identifier may be another word.

The target audio feature may be a feature such as timbre, pitch, intensity, or the like, of a sound. After being obtained, the sound information is compared with timbre, pitch, and intensity of the target audio feature, so as to obtain the corresponding emotion identifier. Optionally, an inputted voice is recognized through at least two branches for voice recognition, in analysis of the received sound signal. A recognition result is outputted only in a case that the two results of voice recognition from the two branches are consistent. The user is prompted to re-input the sound signal in a case that the two results of voice recognition from the two branches are inconsistent.

Optionally, in a case that the results of voice recognition from the at least two voice branches are inconsistent, the at least two results of voice recognition may be further processed according to a majority principle, a weighting algorithm, or a combination of the two, so as to obtain and output a voice recognition result.

Optionally, the branch for voice recognition may be implemented with a recognition algorithm or a training algorithm of hidden Markov model based on statistics, or a combination of the two.

In this embodiment, the target audio feature is preset. The emotion identifier corresponding to the target audio feature is obtained, and the emotion identified by the emotion identifier is determined to be the first emotion, in a case that the similarity between the target audio feature and the sound feature is higher than the predetermined threshold. Thereby, the corresponding first emotion is obtained according to the sound information, and complexity of information interaction is reduced.

In an optional implementation, the determining unit includes an obtaining module and a search module.
(1) The obtaining module is configured to obtain an emotion identifier of the first emotion.
(2) The search module is configured to search for the first interaction information matching the emotion identifier of the first emotion.

Optionally, correspondence between the emotion identifier of the first emotion and the first interaction information may be preset. Corresponding first interaction information is queried according to the obtained emotion identifier, from the preset correspondence between the emotion identifier and the first interaction information. Thereby, the first interaction information is obtained and transmitted.

In this embodiment, the first interaction information is queried according to the correspondence between the emotion identifier and the first interaction information, after the emotion identifier is obtained. Thereby, the first interaction information can be transmitted, and efficiency of information interaction is improved.

In an optional implementation, the search module includes a fifth obtaining submodule, a sixth obtaining submodule, or a seventh obtaining submodule.
(1) The fifth obtaining submodule is configured to obtain the first interaction information matching the first emotion type, in a case that the emotion identifier indicates the first emotion type, where the first interaction information matching the first emotion type is configured to request help for the first virtual object.
(2) The sixth obtaining submodule is configured to obtain the first interaction information matching the second emotion type, in a case that the emotion identifier indicates the second emotion type, where the first interaction information matching the second emotion type is configured to prompt the second virtual object for encouragement.
(3) The seventh obtaining submodule is configured to obtain the first interaction information matching the third emotion type, in a case that the emotion identifier indicates the third emotion type, where the first interaction information matching the third emotion type is configured to issue a query request to the second virtual object.

Games are further taken as an example for illustration. Content carried by the first interaction information is different for different types of the obtained emotion identifier. The first emotion type may be tension, excitement, doubt, or the like. The first interaction information may be text information, such as "Save me", "Come on, we can do it!", and "Are you sure?". The first interaction information matching the first emotion type may be "Save me", in a case that the emotion identifier indicates the first emotion type to be, for example, tension. The first interaction information matching the first emotion type may be "Come on, we can do it!", in a case that the emotion identifier indicates the first emotion type to be, for example, excitement. The first interaction information matching the first emotion type may be "Are you sure?" for expressing doubts, in a case that the emotion identifier indicates the first emotion type to be, for example, doubt.

In this embodiment, the content of the first interaction information is determined according to a type of the emotion identifier. Thereby, complexity of information interaction is further reduced, and flexibility of the information interaction is improved.

In an optional implementation, the determining unit includes at least one of a third determining module, a fourth determining module, or a fifth determining module,
(1) The third determining module is configured to determine text information matching the first emotion.
(2) The fourth determining module is configured to determine image information matching the first emotion.
(3) The fifth determining module is configured to determine audio information matching the first emotion.

Games are further taken as an example with reference to Figure 12 and Figure 13. Figure 12 and Figure 13 show the second client. A message transmitted to from the first client to the second client may be a voice message or an image message. The voice message is as shown in Figure 12, and the image message is as shown in Figure 13.

Figure 12 and Figure 13 are merely examples, and the present disclosure is not limited thereto.

In this embodiment, different types are set for the first interaction information. Thereby, flexibility of information interaction is improved, and complexity of the information interaction is further reduced.

A storage medium is further provided according to an embodiment of the present disclosure. The storage medium stores a computer program, and the computer program when executed is configured to perform steps in any of the foregoing method embodiments.

Optionally, the storage medium in this embodiment may store a computer program for performing following steps S1 to S4.

In step S1, a biological feature of a target object is extracted, where a first virtual object is controlled by the target object via a first client to execute a virtual task.

In step S2, a current first emotion of the target object is recognized according to the extracted biological feature.

In step S3, first interaction information matching the first emotion is determined, where the first interaction information is for interaction.

In step S4, the first interaction information is transmitted to a second client at which a second virtual object is located, where the second virtual object and the first virtual object execute the virtual task jointly.

Optionally, the storage medium in this embodiment may store a computer program for performing following steps S1 and S2.

In step S 1, the second virtual object is determined based on the virtual task, where the second virtual object and the first virtual object are from a same camp.

In step S2, the first interaction information is transmitted to the second client at which the second virtual object is located.

Optionally, the storage medium in this embodiment may store a computer program for performing following a step S1 or S2.

In step S1, all virtual objects from the same camp are obtained as the second virtual objects.

In step S2, a part of virtual objects from the same camp is obtained as the second virtual objects, where the part of virtual objects is associated with the first virtual object.

Optionally, the storage medium in this embodiment may store a computer program for performing following steps S1 and S2.

In step S 1, a third virtual object is determined based on the virtual task, where the third virtual object and the first virtual object are from different camps.

In step S2, second interaction information is transmitted to a third client at which the third virtual object is located, where the second interaction information matches a second emotion, and the second emotion is different from the first emotion.

Optionally, the storage medium in this embodiment may store a computer program for performing following steps. That the terminal extracts the biological feature of the target object includes a following step S 1, and that the terminal recognizes the current first emotion of the target object according to the extracted biological feature includes a following step S2.

In step S1, a facial image of the target object is acquired via an image acquisition device in the terminal at which the first client is located, and a facial feature of the target object is extracted from the facial image.

In step S2, the first emotion of the target object is recognized according to the extracted facial feature.

Optionally, the storage medium in this embodiment may store a computer program for performing following steps S1 and S2.

In step S 1, an emotion identifier matching the extracted facial feature is queried.

In step S2, an emotion represented by the found emotion identifier is determined to be the first emotion.

Optionally, the storage medium in this embodiment may store a computer program for performing following steps S1 and S2.

In step S 1, a sound signal of the target object is acquired via a sound acquisition device in the terminal at which the first client is located, and a sound feature of the target object is extracted from the sound signal.

In step S2, the first emotion of the target object is recognized according to the extracted sound feature.

Optionally, the storage medium in this embodiment may store a computer program for performing following steps S1, S2, and S3.

In step S 1, a preset target audio feature is obtained, where the target audio feature is configured to trigger the first interaction information.

In step S2, an emotion identifier corresponding to the target audio feature is obtained, in a case that similarity between the sound feature and the target audio feature is higher than a predetermined threshold.

In step S3, an emotion represented by the emotion identifier is determined to be the first emotion.

Optionally, the storage medium in this embodiment may store a computer program for performing following steps S1 and S2.

In step S1, an emotion identifier of the first emotion is obtained.

In step S2, the first interaction information matching the emotion identifier of the first emotion is queried.

Optionally, the storage medium in this embodiment may store a computer program for performing a following step S1, S2 or S3.

In step S 1, the first interaction information matching the first emotion type is obtained in a case that the emotion identifier indicates the first emotion type, where the first interaction information matching the first emotion type is configured to request help for the first virtual object.

In step S2, the first interaction information matching the second emotion type is obtained in a case that the emotion identifier indicates the second emotion type, where the first interaction information matching the second emotion type is configured to prompt the second virtual object for encouragement.

In step S3, the first interaction information matching the third emotion type is obtained in a case that the emotion identifier indicates the third emotion type, where the first interaction information matching the third emotion type is configured to issue a query request to the second virtual object.

Optionally, the storage medium in this embodiment may store a computer program for performing a following step S1, S2 or S3.

In step S 1, text information matching the first emotion is determined.

In step S2, image information matching the first emotion is determined.

In step S3, audio information matching the first emotion is determined.

Optionally, the storage medium in this embodiment further stores a computer program for performing steps included in the method according to aforementioned embodiments, which are not repeated herein.

Optionally, those skilled in the art may understand that all or some of the steps of the methods in the aforementioned embodiments may be implemented via a program instructing relevant hardware of a terminal device. The program may be stored in a computer-readable storage medium, and the storage medium may include a flash drive, a read-only memory (ROM), a random access memory (RAM), a magnetic disk, an optical disc, or the like.

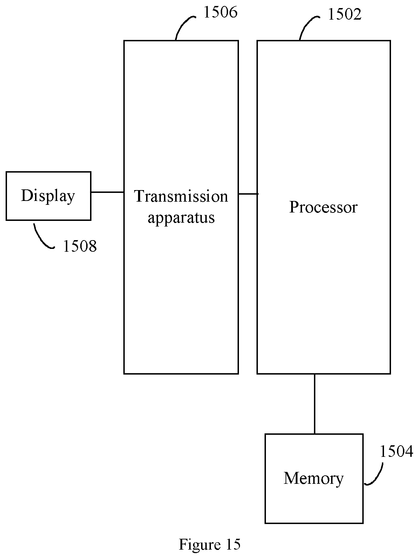

An electronic device is further provided according to another aspect of the embodiments of the present disclosure. The electronic device is configured to perform the aforementioned method for information interaction. As shown in Figure 15, the electronic device includes a processor 1502, a memory 1504, a transmission apparatus 1506, and a display 1508. The memory 1504 stores a computer program, and the processor is configured to execute the computer program to perform steps in any one of the foregoing method embodiments. The transmission apparatus 1506 is configured to transmit acquired facial image, voice information, or the like. The display 1508 is configured to display first interaction information and the like.

Optionally, the electronic device in this embodiment may be located in at least one of multiple network devices in a computer network.

Optionally, the processor 1502 in this embodiment may be configured to execute the computer program to perform following steps S1 to S4.

In step S1, a biological feature of a target object is extracted, where a first virtual object is controlled by the target object via a first client to execute a virtual task.

In step S2, a current first emotion of the target object is recognized according to the extracted biological feature.

In step S3, first interaction information matching the first emotion is determined, where the first interaction information is for interaction.

In step S4, the first interaction information is transmitted to a second client at which a second virtual object is located, where the second virtual object and the first virtual object execute the virtual task jointly.

Optionally, those skilled in the art may understand that the structure shown in Figure 15 is only illustrative. The electronic device may be a terminal device such as a smartphone (for example, an Android mobile phone or an iOS mobile phone), a tablet computer, a palmtop computer, a mobile Internet device (MID), or a PAD. A structure of the foregoing electronic device is not limited to Figure 15. For example, the electronic device may further include more or less components (such a network interface, and the like) than those shown in Figure 15, or may have configurations different from Figure 15.

The memory 1504 may be configured to store a software program and a module, such as program instructions or a program module corresponding to the method for information interaction in embodiments of the present disclosure. The processor 1502 executes the software program and the module stored in the memory 1504, so as to perform various functional applications and process data processing. Thereby, the aforementioned method for information interaction is implemented. The memory 1504 may include a high speed random access memory, and may further include a non-volatile memory, for example, one or more of a magnetic storage apparatuses, a flash memory, or other non-volatile solid-state memories. In some embodiments, the memory 1504 may further include memories arranged remotely with respect to the processor 1502, and these remote memories may be connected to the terminal through a network. Examples of the network include, but are not limited to, the Internet, an intranet, a local area network, a mobile communications network, or a combination thereof.

The transmission apparatus 1506 is configured to receive or transmit data through a network. Specific examples of the network may include a wired network or a wireless network. In an embodiment, the transmission apparatus 1506 includes a network interface controller (NIC), which may be connected to another network device and a router via a cable, so as to communicate with the Internet or a local area network. In an embodiment, the transmission apparatus 1506 is a radio frequency (RF) module that is configured to communicate wirelessly with the Internet.

The memory 1504 is configured to store information such as the first interaction information, the extracted biological feature, and the like.

Sequence numbers of the foregoing embodiments of the present disclosure are merely to facilitate description, and do not imply preference among the embodiments.

An integrated unit in the foregoing embodiments may be stored in the foregoing computer-readable storage medium, in case of being implemented in a form of a software functional unit and sold or used as an independent product. Based on such understanding, the essence or the part contributing to the related art in technical solutions of the present disclosure may be implemented in a form of a software product. The computer software product is stored in a storage medium, and includes several instructions to enable one or more computers (which may be a personal computer, a server, or a network device) to perform all or part of steps in each method described in embodiments of the present disclosure.

In the foregoing embodiments of the present disclosure, emphases are laid in description of each embodiment. A part not described in detail in one embodiment may refer to related descriptions in another embodiment.

In the several embodiments provided in the present disclosure, it is understood that the disclosed client may be implemented in other manners. The aforementioned apparatus embodiments are merely illustrative. For example, division of the units is merely logical, and there may be other manners of division in practical implementations. For example, multiple units or components may be combined or integrated into another system, or some features may be ignored or not performed. In addition, mutual coupling, direct coupling, or communication connection that is displayed or discussed may be implemented via some interfaces. The indirect coupling or the communication connection between the units or the modules may be implemented electrically or in other forms.

The units described as separate parts may or may not be physically separate, and parts displayed as units may or may not be physical units. That is, they may be located in one position, or may be distributed on multiple network units. Some or all of the units may be selected according to a practical requirement, to achieve objectives of the solutions of the embodiments.

In addition, functional units in embodiments of the present disclosure may be integrated into one processing unit, or each of the units may exist alone physically, or two or more units are integrated into one unit. The integrated unit may be implemented in a form of hardware, or may be implemented in a form of a software functional unit.

Hereinabove described are merely optional implementations of the present disclosure. Various improvements and refinements may be made by those skilled in the art without departing from the principle of the present disclosure, and such improvements and refinements all fall within the protection scope of the present disclosure.

### Industrial Applicability

In the method according to embodiments of the present disclosure, the biological feature of the target object is extracted, the current first emotion of the target object is recognized according to the extracted biological feature, the first interaction information that is for interaction and matches the first emotion is determined, and the first interaction information is transmitted to the second client at which the second virtual object is located. The first interaction information for interaction can be obtained according to the biological feature of the target object, and transmitted to the second client. A problem is avoided that it is necessary to interrupt an application task executed by a control object controlled by an application client to complete information interaction with the target object. Therefore, information interaction can be achieved during the control object executing an application task. A technical effect of reducing complexity of an interaction operation is achieved.

## Claims

1. An method for information interaction, comprising:
extracting, by a terminal, a biological feature of a target object, wherein a first virtual object is controlled by the target object via a first client to execute a virtual task;
recognizing, by the terminal, a current first emotion of the target object according to the extracted biological feature;
determining, by the terminal, first interaction information matching the first emotion, wherein the first interaction information is for interaction; and
transmitting, by the terminal, the first interaction information to a second client at which a second virtual object is located, wherein the second virtual object and the first virtual object execute the virtual task jointly.

2. The method according to claim 1, wherein transmitting, by the terminal, the first interaction information to the second client at which the second virtual object is located comprises:
determining, by the terminal, the second virtual object based on the virtual task, wherein the second virtual object and the first virtual object are from a same camp; and
transmitting, by the terminal, the first interaction information to the second client at which the second virtual object is located.

3. The method according to claim 2, wherein determining, by the terminal, the second virtual object based on the virtual task comprises:
obtaining, by the terminal, all virtual objects from the same camp as the second virtual objects; or
obtaining, by the terminal, a part of virtual objects from the same camp as the second virtual objects, wherein the part of virtual objects is associated with the first virtual object.

4. The method according to claim 1, further comprising:
during transmitting, by the terminal, the first interaction information to the second client at which the second virtual object is located,
determining, by the terminal, a third virtual object based on the virtual task, wherein the third virtual object and the first virtual object are from different camps; and
transmitting, by the terminal, second interaction information to a third client at which the third virtual object is located, wherein the second interaction information matches a second emotion, and the second emotion is different from the first emotion.

5. The method according to claim 1, wherein:
extracting, by the terminal, the biological feature of a target object, comprises:
acquiring, by the terminal, a facial image of the target object via an image acquisition device in the terminal at which the first client is located, and
extracting a facial feature of the target object from the facial image; and
recognizing, by the terminal, the current first emotion of the target object according to the extracted biological feature comprises:
recognizing, by the terminal, the first emotion of the target object according to the extracted facial feature.

6. The method according to claim 5, wherein recognizing, by the terminal, the first emotion of the target object according to the extracted facial feature comprises:
searching, by the terminal, for an emotion identifier matching the extracted facial feature; and
determining, by the terminal, an emotion represented by the found emotion identifier to be the first emotion.

7. The method according to claim 1, wherein:
extracting, by the terminal, the biological feature of a target object, comprises:
acquiring, by the terminal, a sound signal of the target object via a sound acquisition device in the terminal at which the first client is located, and
extracting a sound feature of the target object from the sound signal; and
recognizing, by the terminal, the current first emotion of the target object according to the extracted biological feature comprises:
recognizing, by the terminal, the first emotion of the target object according to the extracted sound feature.

8. The method according to claim 7, wherein recognizing, by the terminal, the first emotion of the target object according to the extracted sound feature comprises:
obtaining, by the terminal, a preset target audio feature which is configured to trigger the first interaction information;
obtaining, by the terminal, an emotion identifier corresponding to the target audio feature, in a case that similarity between the sound feature and the target audio feature is higher than a predetermined threshold; and
determining, by the terminal, an emotion represented by the emotion identifier to be the first emotion.

9. The method according to claim 1, wherein determining, by the terminal, the first interaction information that is for interaction and matches the current first emotion of the target object comprises:
obtaining, by the terminal, an emotion identifier of the first emotion; and
searching, by the terminal, for the first interaction information matching the emotion identifier of the first emotion.

10. The method according to claim 9, wherein searching, by the terminal, for the first interaction information matching the emotion identifier of the first emotion comprises:
obtaining, by the terminal, the first interaction information matching the first emotion type in a case that the emotion identifier indicates the first emotion type, wherein the first interaction information matching the first emotion type is configured to request help for the first virtual object;
obtaining, by the terminal, the first interaction information matching the second emotion type in a case that the emotion identifier indicates the second emotion type, wherein the first interaction information matching the second emotion type is configured to prompt the second virtual object for encouragement; or
obtaining, by the terminal, the first interaction information matching the third emotion type in a case that the emotion identifier indicates the third emotion type, wherein the first interaction information matching the third emotion type is configured to issue a query request to the second virtual object.

11. The method according to any one of claims 1 to 10, wherein determining, by the terminal, the first interaction information that is for interaction and matches the current first emotion of the target object comprises at least one of:
determining, by the terminal, text information matching the first emotion;
determining, by the terminal, image information matching the first emotion; or
determining, by the terminal, audio information matching the first emotion.

12. An apparatus for information interaction, applied to a terminal, comprising:
an extraction unit, configured to extract a biological feature of a target object, wherein a first virtual object is controlled by the target object via a first client to execute a virtual task;
a recognition unit, configured to recognize a current first emotion of the target object according to the extracted biological feature;
a determining unit, configured to determine first interaction information matching the first emotion, where the first interaction information is for interaction; and
a transmission unit, configured to transmit the first interaction information to a second client at which a second virtual object is located, wherein the second virtual object and the first virtual object execute the virtual task jointly.

13. The apparatus according to claim 12, wherein the transmission unit comprises:
a first determining module, configured to determine the second virtual object based on the virtual task, wherein the second virtual object and the first virtual object are from a same camp; and
a first transmission module, configured to transmit the first interaction information to the second client at which the second virtual object is located.

14. The apparatus according to claim 13, wherein the first determining module comprises:
a first obtaining submodule, configured to obtain all virtual objects from the same camp, as the second virtual objects; or
a second obtaining submodule, configured to obtain a part of virtual objects from the same camp, as the second virtual objects, wherein the part of virtual objects is associated with the first virtual object.

15. The apparatus according to claim 12, wherein the transmission unit further comprises:
a second determining module, configured to determine a third virtual object based on the virtual task, wherein the third virtual object and the first virtual object are from different camps; and
a second transmission module, configured to transmit second interaction information to a third client at which the third virtual object is located, wherein the second interaction information matches a second emotion, and the second emotion is different from the first emotion.

16. The apparatus according to claim 12, wherein:
the extraction unit comprises:
a first acquisition module, configured to acquire a facial image of the target object via an image acquisition device in the terminal at which the first client is located, and
a first extraction module, configured to extract a facial feature of the target object from the facial image; and
the recognition unit comprises:
a recognition module, configured to recognize the first emotion of the target object according to the extracted facial feature.

17. The apparatus according to claim 16, wherein the recognition module comprises:
a first search submodule, configured to search for an emotion identifier matching the extracted facial feature; and
a first determining submodule, configured to determine an emotion represented by the found emotion identifier to be the first emotion.

18. The apparatus according to claim 12, wherein:
the extraction unit comprises:
a second acquisition module, configured to acquire a sound signal of the target object via a sound acquisition device in the terminal at which the first client is located; and
a second extraction module, configured to extract a sound feature of the target object from the sound signal; and
the recognition unit comprises:
a second recognition module, configured to recognize the first emotion of the target object according to the extracted sound feature.

19. The apparatus according to claim 18, wherein the second recognition module comprises:
a third obtaining submodule, configured to obtain a preset target audio feature, wherein the target audio feature is configured to trigger the first interaction information;
a fourth obtaining submodule, configured to obtain an emotion identifier corresponding to the target audio feature, in a case that similarity between the sound feature and the target audio feature is higher than a predetermined threshold; and
a second determining submodule, configured to determine an emotion represented by the emotion identifier as the first emotion.

20. The apparatus according to claim 12, wherein the determining unit comprises:
an obtaining module, configured to obtain an emotion identifier of the first emotion; and
a search module, configured to search for the first interaction information matching the emotion identifier of the first emotion.

21. The apparatus according to claim 20, wherein the search module comprises:
a fifth obtaining submodule, configured to obtain the first interaction information matching the first emotion type, in a case that the emotion identifier indicates the first emotion type, wherein the first interaction information matching the first emotion type is configured to request help for the first virtual object;
a sixth obtaining submodule, configured to obtain the first interaction information matching the second emotion type, in a case that the emotion identifier indicates the second emotion type, wherein the first interaction information matching the second emotion type is configured to prompt the second virtual object for encouragement; or
a seventh obtaining submodule, configured to obtain the first interaction information matching the third emotion type, in a case that the emotion identifier indicates the third emotion type, wherein the first interaction information matching the third emotion type is configured to issue a query request to the second virtual object.

22. The apparatus according to any one of claims 12 to 21, wherein the determining unit comprises at least one of:
a third determining module, configured to determine text information matching the first emotion;
a fourth determining module, configured to determine image information matching the first emotion; or
a fifth determining module, configured to determine audio information matching the first emotion.

23. A storage medium, storing a computer program, wherein the computer program when executed is configured to perform the method according to any one of claims 1 to 11.

24. An electronic device, comprising a memory and a processor, wherein:
the memory stores a computer program, and the processor when executing the computer program is configured to perform the method according to any one of claims 1 to 11.
